# EUROPÄISCHE PATENTANMELDUNG

(11) **EP 0 952 377 A1**
(43) Veröffentlichungstag der Anmeldung: **27.10.1999**
(21) Anmeldenummer: 98107254.9
(22) Anmeldetag: 21.04.1998
(51) Int. Cl.: F16K 31/56

(54) **Absperrhahn für Flüssigkeitszähler**

(71) Anmelder: Körner, Hans-Holger, 23758 Oldenburg in Holstein (DE)
(72) Erfinder: Körner, Hans-Holger, 23758 Oldenburg in Holstein (DE)
(74) Vertreter: Glawe, Delfs, Moll & Partner

(57) **Zusammenfassung**

Ein Absperrhahn für Flüssigkeitszähler ist mit einer bistabilen Federanordnung (5,6,7,9) versehen, durch die das Küken (3) in jeweils die offene oder geschlossene Endstellung gedrückt ist. Damit wird erreicht, daß der Absperrhahn nicht in einer Zwischenstellung stehenbleibt, wodurch im Falle einer nicht vollständigen Öffnung eine Blendenwirkung des Kükens (3) entsteht, die zu Meßfehlern des Flüssigkeitszählers führen kann.

## Beschreibung

Die Erfindung betrifft einen Absperrhahn für Flüssigkeitszähler.

Bei aus offenkundiger Vorbenutzung bekannten Absperrhähnen kann das den Strömungsweg der Flüssigkeit freigebende oder verschließende Küken jede Stellung zwischen den Endstellungen stabil einnehmen. Steht das Küken in einer solchen Zwischenstellung, so wirkt es auf die Flüssigkeitsströmung wie eine Blende oder eine Düse. Dadurch kann das Strömungsprofil der Flüssigkeit in einer solchen Weise verändert werden, daß ein im Strömungsweg nachgeordneter Flüssigkeitszähler mit einem Meßfehler außerhalb des zugelassenen Toleranzbereichs behaftet wird.

Der Erfindung liegt die Aufgabe zugrunde, einen Absperrhahn zu schaffen, der diese Nachteile vermeidet.

Die erfindungsgemäße Lösung besteht darin, daß das Küken eines Absperrhahns für Flüssigkeitszähler durch eine bistabile Federanordnung in jeweils die offene oder geschlossene Endstellung gedrückt ist.

Dadurch wird erreicht, daß der Absperrhahn nicht in einer Zwischenstellung bleibt, sondern unter der Krafteinwirkung der bistabilen Federanordnung in eine der beiden Endstellungen gebracht wird. Unter den Endstellungen werden die vollständig freigebende und die vollständige verschließende Stellung des Absperrhahns verstanden.

Da der Schließvorgang mindestens teilweise der selbsttätigen Wirkung der Federanordnung überlassen bleibt und diese so bemessen werden kann, daß eine bestimmte maximale Schließgeschwindigkeit eingehalten wird, trägt die Erfindung dazu bei, Druckschläge in der Leitungsinstallation zu vermeiden. Die Erfahrung zeigt, daß dies auch dann der Fall ist, wenn zusätzlich zu der Federwirkung die Handkraft der Bedingungsperson wirkt, weil diese unwillkürlich zurückgehalten wird.

Für Tellerventile ist es bekannt (DE-U-83 03 435), am Ventilschaft eine Federanordnung vorzusehen, durch deren Wirkung der Ventilteller aus beliebigen Zwischenstellungen in die vollständig geöffnete Endstellung gedrückt wird. Diese Federanordnung ist monostabil. Auch ist nicht erkennbar, wie die bekannte axiale Federanordnung, die mit der Ventilbetätigung in axialer Richtung gleichgerichtet ist, auf Absperrhähne übertragen werden kann, um bei deren drehbaren Verschlußelementen (Küken) eine analoge Wirkung zu erzielen.

Es sind viele Ausführungen bistabiler Federanordnungen bekannt, die sich im Prinzip auch für den vorliegenden Anwendungsfall eignen. Jedoch wird zweckmäßigerweise eine Ausfürhung gewählt, bei der die bistabile Federanordnung einen Nokkenkörper und einen damit federbelastet zusammenwirkenden Nockenfolger umfaßt. Der Nockenkörper weist eine Nockenkurve auf. Der Nockenfolger kann eine beliebige, mit der Nockenkurve verträgliche Form aufweisen und beispielsweise ein stiftartiger Vorsprung sein oder ebenfalls eine Nockenkurve aufweisen, die nicht unbedingt den gleichen Kurvenverlauf wie die des Nockenkörpers haben muß.

Zweckmäßigerweise ist die Steigung der Nockenkurve mindestens in den Endabschnitten so gewählt, daß das Produkt aus der Steigung, dem zwischen der Drehachse des Kükens und dem Auflagepunkt des Nockenfolgers auf der Nockenkurve gemessenen Radius und der Federkraft größer ist als das Reibmoment des Absperrhahns. Die Endabschnitte sind die Bereiche der Nockenkurve, die mindestens den jeweiligen Auflagepunkt des Nockenfolgers in den Endstellungen umfassen und darüber hinaus weitere angrenzende Bereiche der Nockenkurve umfassen können. Unter der Steigung wird in diesem Fall die auf eine Drehwinkeländerung der Nockenkurve bezogene axiale Änderung des Nokkenfolgers verstanden, die sowohl von der Form der Nockenkurve wie auch von der Form des Nockenfolgers abhängt. Man erreicht dadurch, daß der Hahn aus verschiedenen Zwischenstellungen im Bereich der Endabschnitte heraus sicher und unter Überwindung des Reibmoments in die jeweilige Endstellung gedrückt wird, also beispielsweise auch dann, wenn kein Betätigungsmoment mehr auf den Absperrhahn wirkt.

Die Steigung der Nockenkurve nimmt vorteilhafterweise in den Endabschnitten von den Endstellungen gesehen ab. Besonders günstig ist es, den Verlauf der Steigung so zu wählen, daß in jeder beliebigen Stellung des Kahns das Produkt aus der Steigung in diesem Punkt und der wirkenden Federkraft konstant ist. Man erreicht dadurch, daß das für die Betätigung des Hahns aufzubringende Drehmoment unter Berücksichtigung der Reibung in den jeweiligen Endabschnitten etwa konstant ist. Besonders günstige Formen der Nockenkurve sind beispielsweise parabelartige oder ellipsenartige Kurven. Vorteilhaft ist es ferner, wenn die Nockenkurve - vor allem In dem zwischen den Endabschnitten gelegenen Bereich - keine Knickstellen aufweist; unbedingt nötig ist dies aber nicht. Durch eine entsprechende Gestaltung der Nockenkurve können stabile Endpositionen für den Nockenfolger gebildet und dadurch Endstellungen für das Küken festgelegt werden. Separate Anschläge für die Endstellungen können dann entfallen.

Meßfehler, wie sie durch die Strömungsbeeinflussung nicht vollständig in die Endstellung gebrachter Küken entstehen, werden dank der Erfindung durch die Stabilität der öffnenden Endstellung vermieden; die Stabilität in der schließenden Endstellung trägt zur Sicherheit insbesondere bei Wartungsarbeiten bei. Neben der Bistabilität weist der erfindungsgemäße Absperrhahn weitere Vorteile auf. Zum einen kann die bistabile Federanordnung vollständig im trockenen Bereich des Absperrhahns angeordnet werden, wodurch die Gefahr von Funktionsbeeinträchtigungen beispielsweise durch Ablagerungen von Flüssigkeitsbestandteilen vermieden wird und die Zugänglichkeit beispielsweise für Reparaturarbeiten erhöht wird. Zum anderen ist die bistabile Federanordnung in der Weise ausfallsicher, daß z. B. bei einem Federbruch der erfindungsgemäße Absperrhahn sicher in beide Endstellungen bringbar ist.

Die Erfindung wird im folgenden anhand eines Ausführungsbeispiels unter Bezugnahme auf die Zeichnung erläutert. Darin zeigen:
- Fig. 1: einen Längsschnitt des erfindungsgemäßen Absperrhahns;

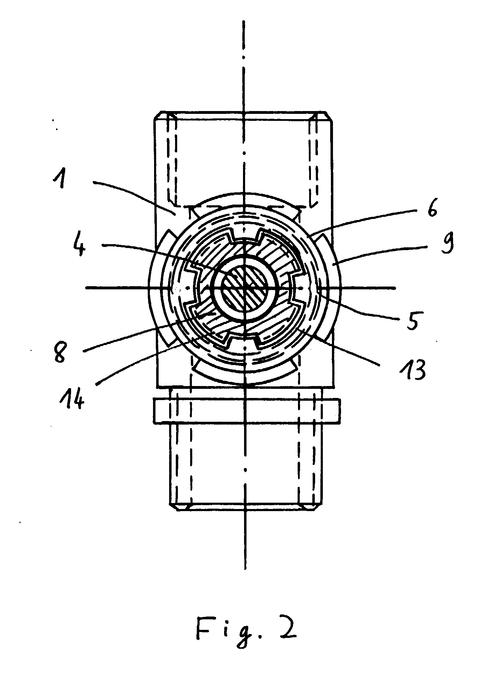

- Fig. 2: einen Schnitt entlang der Linie II-II gemäß Fig. 1 bei abgenommenen Betätigungsgriff;
- Fig. 3: eine Abwicklung der Nockenkurven des Nockenkörpers und des Nockenfolgers.

Der Absperrhahn weist ein Gehäuse 1, einen Betätigungsgriff 2, ein Küken 3, eine Spindel 4 und eine bistabile Federanordnung auf, die eine Feder 5, Griffnocken 7 und einen Federnokkenring 6 mit Nocken 9 umfaßt.

In dem Gehäuse 1 ist ein Kanal für die Flüssigkeitsströmung mit einer das Küken 3 aufnehmenden Aufweitung vorgesehen. Das Küken 3 ist mit der Spindel 4 drehfest verbunden, die in einer quer zum Kanal angeordneten Spindelhülse 8 drehbar gelagert ist. Auf das kükenferne Ende der Spindel 4 ist der Betätigungsgriff 2 mit seinem oberen Teil gesteckt, wobei ein an dem Spindelende ausgebildeter Vierkant 10 passend in eine zentrale Vierkantöffnung 11 des Betätigungsgriffs 2 eingreift und so eine drehfeste Verbindung zwischen dem Betätigungsgriff 2 und der Spindel 4 schafft. Durch eine Mutter 15 ist der Betätigungsgriff 2 auf der Spindel 4 gesichert. Der untere Teil des Betätigungsgriffs 2 ist mit einem als Hohlzylinder ausgebildeten Mantel 12 versehen.

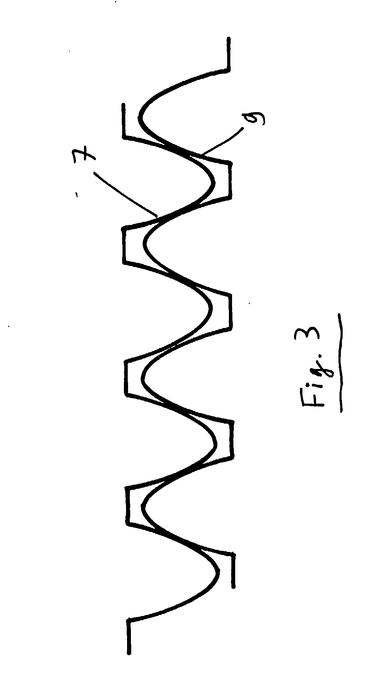

Auf die Spindelhülse 8 sind die Feder 5 und der Federnockenring 6 in einer Weise aufgeschoben, daß ein dem Küken 3 zugewandtes Ende der Feder 5 sich auf dem Gehäuge 1 abstützt und ein gegenüberliegendes Ende der Feder 5 auf eine radial an der Innenseite des Federnockenrings 6 vorstehende Schulter 16 wirkt. Zur Sicherung der Spindel 4 in der Spindelhülse 8 ist an dem kükenfernen Ende der Spindelhülse 8 eine Überwurfmutter 17 angeordnet. Der Federnockenring 6 weist parallel zur Spindel 4 laufende Nuten 13 auf, in die ebenfalls parallel zur Spindel 4 laufende und an der Spindelhülse 8 angeordnete Leisten 14 eingreifen, so daß der Federnockenring auf der Spindelhülse 8 längsverschieblich und drehfest gehalten ist. Der Federnockenring 6 umgibt die Feder 5 in einem Teil ihrer Höhe topfartig. In seiner als Zylindermantel ausgebildeten Außenfläche sind reliefartig vier Nocken 9 als Stufen ausgebildet, deren in Fig. 3 erkennbare Nockenkurve zwischen dem unteren, dem Gehäuse 1 zugewandten Rand des Federnockenrings 6 und dem gegenüberliegenden oberen Rand verläuft, wobei über den Umfang der Außenfläche vier Nocken 9 in gleicher Form und gleichmäßigem Abstand angeordnet sind. Mit den Nocken 9 wirken am Griff angebrachte und deshalb als Griffnocken bezeichnete Nocken 7 als Nockenfolger zusammen, die ebenfalls reliefartig als Stufen an der Innenseite des Mantels 12 angeordnet sind. Die Nockenkurven sowohl des Nocken 9 wie auch der Griffnocken 7 sind - wie Fig. 3 zeigt - entgegengesetzt parabelförmig ausgestaltet. Fig. 3 zeigt die Relativstellung der Nocken in einer stabilen Endstellung.

Diese Nockenanordnung ermöglicht es, den Hahn in beliebiger Richtung von einer Endstellung in die andere zu drehen; die Drehungen zum Öffnen oder Schließen können in beliebiger Richtung erfolgen. Dies ist durch den Verzicht auf Anschläge möglich, die aufgrund der Stabilität beider Endstellung nicht erforderlich sind.

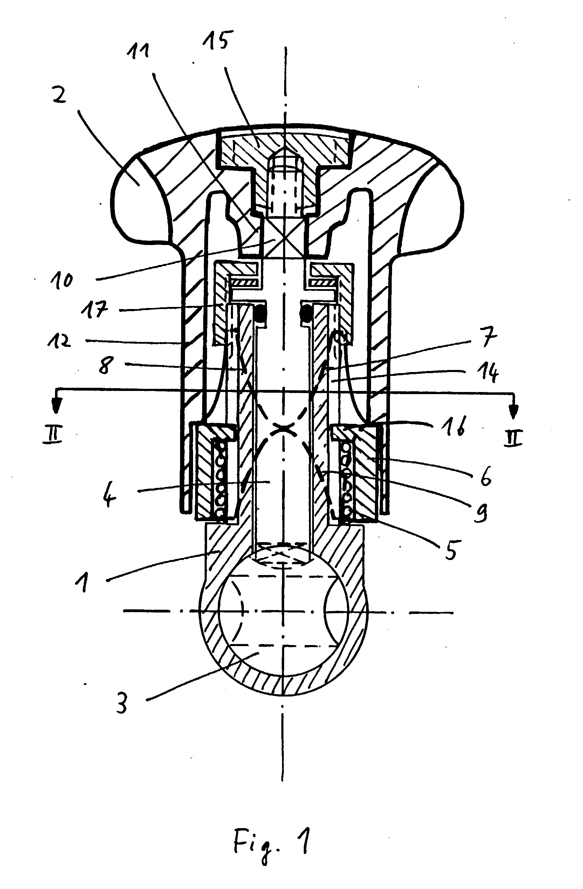

In Fig. 1 ist eine Stellung des Absperrhahns dargestellt, bei der das Küken 3 um 45° aus der vollständig freigebenden Endstellung gedreht ist, es sich also in der Mittenstellung zwischen vollständig freigebender und vollständig verschließender Endstellung befindet. In dieser Stellung ist die Feder 5 maximal zusammengedrückt und erreicht ihre auf den Federnokkenring 6 und die Griffnocken 7 ausgeübte Kraft ihr Maximum. Diese Stellung kann als Umschlagpunkt der bistabilen Federanordnung bezeichnet werden, aus der das Küken 3 bereits bei kleinsten Auslenkungen in die jeweils näherliegende der beiden Endstellungen gedrückt wird.

Bei einer Verdrehung des Betätigungsgriffs 2 aus in Fig. 1 dargestellten Lage wandert die in Fig. 1 gestrichelt dargestellte Griffnocke 7 aus der dargestellten Mittelstellung heraus. Der Auflagepunkt wandert in einen Bereich des Nockens 9, in dem die Nockenkurve eine Steigung aufweist. Unter der Wirkung der Kraft der Feder 5 übt die Nocke 9 im Auflagepunkt nach Art eines Heils eine in Umfangsrichtung der Spindel 4 wirkende Kraft auf den Griffnocken 7 aus, die den Betätigungsgriff 2 weiter zu drehen sucht. Dabei gleitet der Federnockenring 6 unter der Krafteinwirkung der Feder 5 auf der Spindelhülse 8 vom Küken 3 weg. Die Höhe dieser weiterdrehenden Kraft ist das Produkt aus der Federkraft und der Steigung im Auflagepunkt, wobei die Steigung entsprechend der mit zunehmender Entfernung des Federnockenrings 6 von dem Gehäuse 1 abnehmenden Federkraft zunimmt, so daß im Ergebnis die durch die Federanordnung auf den Griffnocken 7 wirkende Kraft und damit auch das Drehmoment etwa konstant ist. Dieses ist vorzugsweise so bemessen, daß es eine sichere Überwindung der Reibungswiderstände ermöglicht. Damit wird erreicht, daß der Absperrhahn sicher und selbsttätig die vollständig geöffnete Endstellung erreicht, sowie er über die in Fig. 1 gezeigte Mittelstellung gedreht wird. Jedoch kann die Federkraft auch geringer bemessen werden, weil es in der Praxis ausreicht, wenn sie die Handkraft ein wenig unterstützt. Unwillkürlich läßt der Benutzer die Drehung dann erst in der seinem Gefühl durch die Federanordnung vorgegebene Endstellung enden.

Die Endstellung ist erreicht, wenn die Griffnocke 7 derart gegenüber der Nocke 9 verdreht ist, daß die in gleichmäßigen Abständen angeordneten Griffnocken 7 und die Nocken 9 wie "Zahn und Lücke" angeordnet sind (Fig. 3); in dieser Stellung liegen beide Flanken einer Nocke 9 an jeweils einer Flanke zweier benachbarter Griffnocken 7 an. Der Federnockenring 6 ist dann in seiner am weitesten vom Küken 3 entfernten Position und die Kraft der Feder 5 erreicht ein Minimum. Die Höhe dieses Minimums ist durch die Federkonstante und die Vorspannung der Feder 5 so bemessen, daß das Küken 3, wenn es sich außerhalb einer Endstellung befindet, in die Endstellung gedreht wird.

Entsprechendes gilt bei einer Drehung des Betätigungsgriffs 2 in die entgegengesetzte Richtung.

## Patentansprüche

1. Absperrhahn für Flüssigkeitszähler, dadurch gekennzeichnet, daß das Küken (3) durch eine bistabile Federanordnung (5, 6, 7, 9) in jeweils die offene oder geschlossene Endstellung gedrückt ist.

2. Absperrhahn nach Anspruch 1, dadurch gekennzeichnet, daß die bistabile Federanordnung (5, 6, 7, 9) einen Nockenkörper (6) und einen damit federbelastet zusammenwirkenden Nockenfolger (7) umfaßt.

3. Absperrhahn nach Anspruch 2, dadurch gekennzeichnet, daß ein auf dem Nockenkörper (6) angeordneter Nocken (9) eine Nockenkurve mit die Endstellungen umfassenden Endabschnitten aufweist, in denen das Produkt aus Steigung, Federkraft und Radius größer als das Reibmoment des Kükens (3) ist.

4. Absperrhahn nach Anspruch 3, dadurch gekennzeichnet, daß die Steigung der Nockenkurve von ihrem Umschlagpunkt zu den Endabschnitten hin zunimmt.

5. Absperrhahn nach Anspruch 4, dadurch gekennzeichnet, daß das Produkt aus Steigung und Federkraft zwischen den Endabschnitten und dem Umschlagpunkt jeweils konstant ist.

6. Absperrhahn nach einem der Ansprüche 2 bis 5, dadurch gekennzeichnet, daß mit dem Gehäuse (1) eine die Spindel (4) aufnehmende Spindelhülse (8) fest verbunden ist, die als Längsführung für den von der Feder (5) beaufschlagten der beiden Teile Nockenkörper (6)/Nockenfolger (7) ausgebildet ist und der andere dieser Teile mit einem mit der Spindel (4) verbundenen Betätigungsteil (2) verbunden ist.
